# EUROPÄISCHE PATENTSCHRIFT

(11) **EP 0 892 597 B1**
(45) Veröffentlichungstag und Bekanntmachung des Hinweises auf die Patenterteilung: **30.01.2002**
(21) Anmeldenummer: 97917304.4
(22) Anmeldetag: 10.04.1997
(51) Int. Cl.: A01J 5/007

(54) **VERFAHREN UND VORRICHTUNG ZUM AUTOMATISCHEN MILCHENTZUG**
AUTOMATIC MILKING PROCESS AND DEVICE
PROCEDE ET DISPOSITIF DE TRAITE AUTOMATIQUE

(30) Priorität: 11.04.1996 DE 19614376
(43) Veröffentlichungstag der Anmeldung: 27.01.1999
(73) Patentinhaber: Laub-Maier, Maria, 86842 Türkheim (DE)
(72) Erfinder: Laub-Maier, Maria, 86842 Türkheim (DE)
(74) Vertreter: Grünecker, Kinkeldey, Stockmair & Schwanhäusser Anwaltssozietät
(86) Internationale Anmeldenummer: EP9701794
(87) Internationale Veröffentlichungsnummer: WO9737526

(56) Entgegenhaltungen:
- FR-A- 2 023 680
- US-A- 3 783 837
- US-A- 5 218 924

## Beschreibung

Die Erfindung betrifft ein Verfahren und eine Vorrichtung zum automatischen Milchentzug mit Hilfe eines Melkzeugs, bei dem in einem Saugtakt mit Hilfe des über einen langen Milchschlauch, ein Sammelstück und einen Melkbecher unterhalb der Zitze anliegenden Melkvakuum Milch aus der Zitze abgesogen und während eines Entlastungstakt sich das Zitzengummi des Melkbechers an die Zitze zur Entlastung der Zitze anlegt.

Beim üblichen automatischen Milchentzug liegt ein sogenanntes Nennmelkvakuum an der im Stall bzw. im Melkstand fest verlegten Milchabführleitung an. Dieses Nennmelkvakuum wird dazu verwandt, einerseits Milch aus der Zitze abzusaugen und andererseits, um die abgesaugte Milch abzutransportieren. Wie hoch das Vakuum tatsächlich ist, das unterhalb der Zitze zu bestimmten Augenblicken wirksam ist, hängt von mehreren Faktoren, insbesondere jedoch dem Querschnitt des langen Milchschlauches einerseits und der Größe des aus der Zitze abgesaugten Milchflusses einer Kuh andererseits ab. Aus diesem Grunde sollten an sich zur optimalen Einstellung des Vakuums unterhalb der Zitze während des Saug- und des Entlastungstaktes an den maximal zu erwartenden Milchfluß der Kuh angepaßte lange Milchschläuche verwandt werden. Aufgrund der Tatsache, daß jedoch zumeist mehrere Kühe nacheinander mit demselben Melkzeug gemolken werden, ergeben sich deshalb zwangsläufig Verhältnisse, die kein optimales Abmelken ermöglichen. Werden beispielsweise lange Milchschläuche mit einem zu geringen Innenquerschnitt verwandt, die für eine bestimmte Kuh mit geringem Milchfluß optimal sein können, so kann dies bei der nächstfolgenden Kuh mit einem höheren Milchfluß dazu führen, daß die Milchableitungskapazität einerseits nicht ausreichend hoch ist, so daß es zu einem unerwünschten Rückstau kommt, und daß andererseits das Melkvakuum unterhalb der Zitze so niedrig wird, daß sich entweder keine ausreichende Druckentlastung der Zitze mehr ergibt, oder dass sogar im Extremfall die Melkbecher abfallen. Werden dagegen lange Milchschläuche mit einem sehr großen Innenquerschnitt verwandt, die eine optimale Anpassung darstellen würden für Kühe mit sehr hohem Milchfluss, so kann es bei der Verwendung dieses Melkzeuges bei Kühen mit geringem Milchfluss dazu führen, dass sich unterhalb der Zitze während des Entlastungstakte ein zu hohes Vakuum einstellt, was zwangsläufig auf die Dauer zu Schädigungen der Zitze führen muss. - Um eine möglichst optimale Anpassung zu erreichen sind deshalb lange Milchschläuche mit mindestens neun verschiedenen Innenquerschnitten auf dem Markt, nämlich jeweils mit Unterschieden von 1 mm, Schläuche mit einem Innendurchmesser zwischen 8 und 16 mm. -

Die Druckschrift FR-A-2.023.680 offenbart eine Melkanlage, in der das Vakuum unter der Zitze an den Milchfluss dadurch angepasst ist, dass über einen Mischstromsensor das Vakuum mit Hilfe eines Regelventils mit zwei Leitungen mit jeweils verschieden hohem Vakuum kontinuierlich oder stufenweise geändert wird.

Der vorliegenden Erfindung liegt deshalb die Aufgabe zugrunde, hier eine Verbesserung durchzuführen.

Diese Aufgabe wird bei einem Verfahren der eingangs genannten Art gemäß einer ersten Lösung erfindungsgemäß dadurch gelöst, dass ein langer Milchschlauch mit einem die Abführung großer Milchflüsse ermöglichenden großen Innenquerschnitt verwandt wird, und dass der Durchtrittsquerschnitt des Milchableitungssystems des Melkzeugs an einer vorbestimmten Stelle während des Entlastungstaktes in Abhängigkeit von dem unterhalb der Zitze herrschenden Druck gesteuert wird. Die Steuerung kann hierbei auch derart erfolgen, dass ein Sollwert für den unterhalb der Zitze erwünschten Unterdruck vorgegeben wird, und dass der Durchtrittsquerschnitt des Milchableitungssystems derart gesteuert wird, dass eine möglichst gute Annäherung an den Sollwert entsprechend einem Regelvorgang erreicht wird.

Da bei dem Verfahren von einem langen Milchschlauch mit einem Innenquerschnitt ausgegangen wird, der für hohe Milchflüsse an sich optimal wäre, wird bei niedrigeren Milchflüssen gegenüber diesem Ausgangspunkt ein ansteigendes Vakuum an der Zitze während des Entlastungstaktes erfolgen. Dem kann entsprechend entgegengewirkt werden, indem der Durchtrittsquerschnitt des Milchableitungssystems des Melkzeuges entsprechend verringert wird. Auf diese Weise findet ein erhöhter Vakummabfall über die Länge des Milchableitungssystems statt, was dazu führt, daß unterhalb der Zitze nur noch ein geringeres Vakuum wirksam wird, das in Verbindung mit dem im Pulsatorraum des Melkbechers während des Entlastungstaktes üblicherweise herrschenden atmosphärischen Drucks abzüglich des für da Kollabieren, d.h. Einfalten des Zitzengummis, notwendigen Drucks sodann eine für die Entlastung der Zitze optimalen Unterdruck unterhalb der Zitze ergibt.

Gemäß einer zweiten Lösung wird die Aufgabe erfindungsgemäß dadurch gelöst, daß ein Milchschlauch mit einem die Abführung großer Milchflüsse ermöglichenden großen Innenquerschnitt verwandt wird, und daß während des Entlastungstaktes der Durchtrittsquerschnitt des Milchableitungssystems des Melkzeugs an einer vorbestimmten Stelle in Abhängigkeit von der abzutransportierenden Milchmenge gesteuert wird. Da der lange Milchschlauch an sich abgestimmt ist auf hohe Milchflüsse, so führt die Verwendung eines solchen Milchschlauches gemäß der Erfindung bei niedrigen Milchflüssen zu einer Verringerung des Durchtrittsquerschnittes, was andererseits wiederum zu einem größeren Abfall von Vakuum über das Milchableitungssystem des Melkzeuges und damit wiederum zu einem verringerten Unterdruck während des Entlastungstaktes unter der Zitze führt.

Für eine entsprechende Steuerung oder Regelung kann besonders ein Milchflußmesser, etwa in dem langen Milchschlauch, vorgesehen sein. In diesem Falle erfolgt die Änderung des Durchtrittsquerschnitts des Milchableitungssystems in Abhängigkeit von dem so gemessenen Milchfluß. Für die Durchführen der Erfindung ist es jedoch nicht unbedingt notwendig, den Milchfluß selbst zu messen. Vielmehr kann hierzu auch etwa die während des Entlastungstaktes aus dem Sammelstück abzutransportierende Milch dienen. Hier kann etwa der während des Entlastungstaktes festgestellte maximale Milchstand in dem Sammelstück dienen. Eine Steuerung kann aber auch derart erfolgen, daß der Durchtrittsquerschnitt des Milchableitungssystems entsprechend dem sich ändernden Milchniveaustand in dem Sammelstück gesteuert wird.

Es ergibt sich als ein wesentlicher Vorteil der Erfindung, daß mit Hilfe eines langen Milchschlauches mit lediglich einem Innenquerschnitt Kühe mit äußerst unterschiedlichen Milchflüssen optimal gemolken werden können. Da bei den bisher bekannten maximalen Milchflüssen von etwa 12 bis 13 l/min ein Melkschlauch mit einem Innendurchmesser von 16 bis 18 mm optimal wäre, könnte man sich mit der Verwendung derartiger langer Milchschläuche begnügen. D.h. die Fertigung und auch die Lagerhaltung von Melkschläuchen mit bisher unterschiedlichsten Durchmessern würde sich äußerst vereinfachen. - Die Erfindung kann aber auch durchaus mit Vorteil angewandt werden, ohne daß jeweils Melkschläuche verwandt werden, die für den absolut höchsten Milchfluß geeignet sind. Ist etwa bekannt, daß einer Herde von zu melkenden Kühen ein höchster Milchfluß von lediglich 1 bis 1 l/min zu erwarten ist, so kann hier selbstverständlich ein langer Milchschlauch mit einem Durchmesser von etwa 11 mm verwandt werden, da eine Anpassung an niedrigere Milchflüsse sodann automatisch gemäß der Erfindung erfolgt.

Ausgehend von einer Vorrichtung zum automatischen Milchentzug mit einem Melkzeug, das einen langen Milchschlauch, ein Sammelstück und wenigstens einen Melkbecher umfaßt, über das ein Melkvakuum an die Zitze anlegbar ist, und eine Vorrichtung zum Umsteuern des Melkbechers zwischen einer Saugphase, in der aus der Zitze Milch abgesogen wird, und einer Entlastungsphase, in der das Zitzengummi des Melkbechers zur Entlastung der Zitze gegen diese anliegt, wird die gestellte Aufgabe erfindungsgemäß dadurch gelöst, daß ein langer Milchschlauch mit einem die Abführung großer Milchflüsse ermöglichenden großen Innenquerschnitt vorgesehen ist, daß eine Einrichtung zur Veränderung des Durchtrittsquerschnitts des Milchableitungssystems des Melkzeugs an einer vorbestimmten Stelle vorgesehen ist, und daß eine Einrichtung zur Veränderung des Durchtrittsquerschnitts in Abhängigkeit von dem unterhalb der Zitze während des Entlastungstaktes anliegenden Unterdrucks vorgesehen ist.

Vorzugsweise wird die Einrichtung zur Veränderung des Durchtrittsquerschnitts zur ihrer Steuerung unmittelbar mit dem Milchableitungsrohr unterhalb der Zitze oder dem Sammelstück verbunden. Auf diese Weise kann eine unmittelbare Steuerung aufgrund des sich ändernden Unterdrucks unterhalb der Zitze erfolgen.

Gemäß einer weiteren Ausführungsform wird eine Druckmeßvorrichtung vorgesehen, die mit dem Inneren der Milchabführleitung im Bereich unterhalb der Zitze und dem Sammelstück verbunden ist und entsprechend dem gemessenen Druck die Einrichtung zur Veränderung des Durchtrittsquerschnitts betätigt. Die Betätigung kann sodann sowohl durch eine elektrische wie auch eine pneumatische Betätigungsvorrichtung erfolgen.

Gemäß einer zweiten Lösung wird ausgehend von einer Vorrichtung der eingangs erwähnten Art die Aufgabe erfindungsgemäß dadurch gelöst, daß ein langer Milchschlauch mit einem die Abführung großer Milchflüsse ermöglichenden großen Innenquerschnitt vorgesehen wird, daß eine Einrichtung zur Veränderung des Durchtrittsquerschnitts des Milchableitungssystem des Melkzeugs an einer vorbestimmten Stelle vorgesehen wird, und daß eine Einrichtung zur Veränderung der Durchtrittsquerschnitts in Abhängigkeit von der abzutransportierenden Milchmenge vorgesehen wird.

Gemäß einer vorzugsweise Ausführungsform umfaßt die Einrichtung zur Veränderung des Durchtrittsquerschnitts einen in dem Sammelstück vorgesehenen Schwimmer, der in Abhängigkeit von seinem Schwimmniveau den Durchtrittsquerschnitt der Auslaßleitung des Sammelstücks oder der Einlaßleitungen zu dem Sammelstück verändert. Hierdurch ergibt sich eine äußerst einfache Steuerung in Abhängigkeit von lediglich dem Niveau der in dem Sammelstück zum Abtransport vorliegenden Milch.

Gemäß einer anderen Ausführungsform ist in dem Milchableitungssystem ein Milchflußmesser vorgesehen, der in Abhängigkeit von dem gemessenen Milchfluß ein Betätigungssignal auf die Einrichtung zur Veränderung des Durchtrittsquerschnitts gibt.

Die Einrichtungen zur Veränderung des Durchtrittsquerschnitts können etwa aus einer pneumatisch betätigbaren Ringmanschette, oder einer pneumatisch oder elektrisch betätigbaren Irisblende, oder auch etwa aus einer pneumatisch oder elektrisch betätigbaren Ventilmembran bestehen.

Im folgenden soll die Erfindung näher von in der Zeichnung dargestellten Ausführungsformen erläutert werden. In der Zeichnung zeigen:
- Fig. 1: eine Darstellung des Verlaufs des Melkvakuums unterhalb der Zitze, sowie den zeitlichen Verlauf des Vakuums im Pulsatorraum des Melkbechers für einen optimalen Unterdruck unterhalb der Zitze während des Entlastungstaktes,
- Fig. 2: eine ähnliche Darstellung wie in Fig. 1, bei der das Vakuum unterhalb der Zitze im Entlastungstakt zu hoch ist,
- Fig. 3: eine ähnliche Darstellung wie in Fig. 1, bei der jedoch das Vakuum unterhalb der Zitze zu stark abgesenkt ist,
- Fig. 4: eine schematische Darstellung einer Ausführungsform einer Einrichtung zur Veränderung des Durchtrittsquerschnitts des Milchableitungssystems,
- Fig. 5: eine schematische Darstellung, in der die in Fig. 4 gezeigte Einrichtung in den langen Milchschlauch strömungsunterhalb des Sammelstücks eingesetzt ist, und
- Fig. 6: eine schematische Darstellung einer anderen Ausführungsform einer Einrichtung zur Veränderung des Durchtrittsquerschnitts .

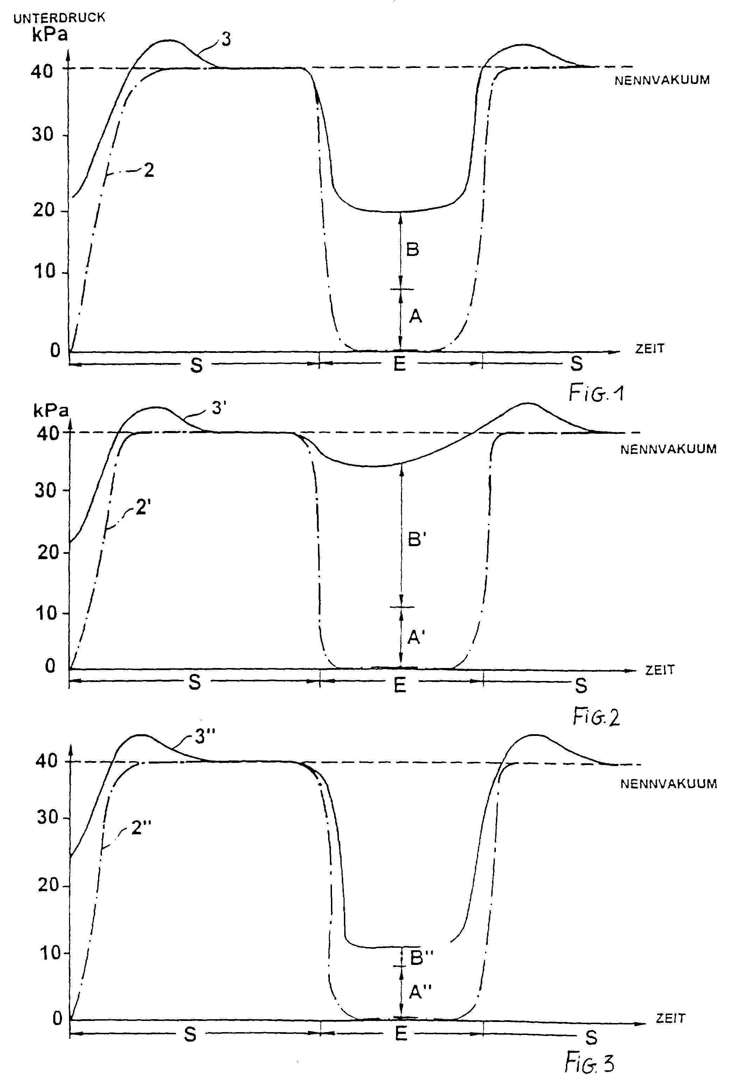

In Fig. 1 ist ein Koordinatensystem gezeigt, bei dem auf der Ordinate der Unterdruck in kPa aufgetragen ist, während die Abszisse die Zeitachse zeigt. Die Zeitabschnitte S stehen für den Saugtakt und die Zeitabschnitte E für den Entlastungstakt. Die Kurve 2 (strichpunktliniert gezeichnet) zeigt den Verlauf des Vakuums im Pulsatorraum des Melkbechers. Der Pulsatorraum wird durch den zwischen der Innenseite der Melkbecherhülse und der Außenseite des Zitzengummischlauches liegenden Raum gebildet. Während des Saugtaktes steigt der Unterdruck in dem Pulsatorraum auf praktisch das Nennvakuum von etwa 40 kPa, wodurch der Zitzengummischlauch auf seinen vollen Querschnitt aufgeweitet wird und das Melkvakuum unter der Zitze voll zum Absaugen der Milch aus der Zitze dienen kann. Während des Entlastungstaktes E fällt das Vakuum im Pulsatorraum praktisch auf Null, da während dieser Phase Atmosphärendruck in den Pulsatorraum gegeben wird. Anschließend, während des nächstfolgenden Saugtaktes, steigt das Vakuum um Pulsatorraum wieder auf Nennvakuum.

Der Verlauf des Vakuums unterhalb der Zitze ist durch die Kurve 3 (in durchgezogener Linie dargestellt) gezeigt. Während des Saugtaktes steigt das Vakuum zunächst über das Nennvakuum hinaus an, was darauf beruht, daß ein Saugeffekt durch das plötzliche Aufweiten des Zitzengummischlauches erfolgt. Das Vakuum unterhalb der Zitze nimmt sodann etwa Nennvakuum an. Während des Entlastungstaktes nimmt das Vakuum unterhalb der Zitze ab, jedoch nicht in dem Maße, wie der Druck in dem Pulsatorraum. Das Vakuum unterhalb der Zitze fällt in dem dargestellten Beispiel lediglich auf etwa 20 kPa nach einem Unterdruck von 40 kPa während des Saugtaktes. Die Verringerung des Vakuums unterhalb der Zitze während des Entlastungstaktes beruht auf dem durch den Milchabtransport bedingten Vorgang. Da in der Entlastungsphase im Innenraum des Zitzengummischlauches ein geringerer Druck herrscht als auf seiner Außenseite im Pulsatorraum, kollabiert der Schlauch, wodurch er sich an die Zitze anlegt und praktisch unterhalb der Zitze durch Gegeneinanderanliegen der Wände schließt. Die Druckdifferenz wird durch die Summe der Druck A und B angegeben. Von dieser Gesamtdruckdifferenz wird jedoch der Druck A benötigt, um das Zitzengummi zum Einfalten zu bringen. Man spricht von einem sogenannten Einfaltdruck des Zitzengummis. Im vorliegenden Fall beträgt dieser Einfaltdruck etwa 8 kPa. Der Rest der Druckdifferenz B wirkt als Druck auf die Zitze und dient zur Entlastung der Zitze während des Entlastungstakts. Im vorliegenden Fall liegt der Entlastungsdruck B bei etwa 12 kPa. Dies ist ein Druck, der die Zitze ausreichend entlastet und bei der Kuh eine angenehme Empfindung auslöst. Der im Entlastuntstakt auf die Zitze wirkende Druck sollte etwa im Bereich zwischen 10 und 20 kPa liegen. Bei der Bestimmung dieses Drucks ist, wie oben ausgeführt wurde, jeweils der Einfaltdruck des Zitzengummis zu berücksichtigen. Dieser Einfaltdruck kann in Abhängigkeit von dem verwandten Zitzengummi zwischen etwa 5 kPa und 18 kPa liegen.

In Fig. 2 ist eine ähnliche Darstellung wie in Fig. 1 gezeigt. Der Unterschied des Verlaufs der Kurve 3' des Vakuums unterhalb der Zitze zu der Darstellung in Fig. 1 liegt darin, daß die Kurve 3' im Entlastungstakt keine wesentliche Abnahme des Vakuums unterhalb der Zitze gegenüber dem Nennvakuum zeigt. Die Differenz liegt lediglich etwa bei 5 kPa, d.h. einer Absenkung von 40 kPa auf etwa 35 kPa. Da sich der Verlauf des Drucks im Pulsatorraums nicht ändert, ergibt sich dadurch eine wesentlich vergrößerte Druckdifferenz zwischen dem Druck im Inneren des Pulsatorraums und dem Druck unterhalb der Zitze. Dieser Druck entspricht der Summe der Drücke A' und B'. Nimmt man an, daß wiederum ein Zitzengummi mit einem Einfaltdruck von etwa 8 kPa benutzt wurde, so ergibt sich, daß der auf die Zitze wirkende Druck B' bei etwa 27 kPa liegt. Dieser Druck wird von der Kuh als unangenehm und als Streß empfunden, wodurch die Gesamtmilchausbeute verringert wird. Darüber hinaus hat sich gezeigt, bei einem so hohen auf die Zitze wirkenden Druck während der Entlastungsphase eine Veränderung der Zitze eintritt, d.h. es zeigt sich, daß die Zitze nach auswärts umgestülpt wird und eine bleibende Veränderung erfährt. Dies trägt zu einem erhöhten Bakterienbefall und damit zu Mastitiserkrankungen der Kuh bei.

Ein Kurvenverlauf 3', wie er in Fig. 2 gezeigt ist, ergibt sich dann, wenn etwa lange Milchschläuche mit einem verhältnismäßig großen Innenquerschnitt bei einer Kuh verwandt werden, die einen niedrigen Milchfluß aufweist.

In Fig. 3 ist ein Kurvenverlauf dargestellt, bei dem die Kurve für den Druck unterhalb der Zitze im Entlastungstakt einen verhältnismäßig starken Abfall des Vakuums bis auf etwa 10 kPa zeigt. Geht man von einem gleichen Einfaltdruck A'' des Zitzengummis, wie in den vorhergehenden Beispielen aus, d.h., daß ein Einfaltdruck von etwa 8 kPa angenommen wird, so führt dies dazu, daß der Druck B'', der im Entlastungstakt auf die Zitze wirkt, lediglich 2 kPa beträgt. Dieser Druck wird als zu niedrig für eine wirksame Entlastung der Zitze während des Entlastungstaktes angesehen. Solche niedrigen Drücke können andererseits auch dazu führen, daß der Melkbecher gegebenenfalls völlig von der Zitze abfällt. Ein Kurvenverlauf, wie er in Fig. 3 gezeigt ist, ergibt sich dann, wenn ein langer Milchschlauch mit einem Innenquerschnitt verwandt wird, der an sich für kleinere Milchflüsse vorgesehen ist. Wird ein solcher Milchschlauch für eine Kuh mit verhältnismäßig hohen Milchflüssen verwandt, so erfolgt der in Fig. 3 dargestellte übermäßige Abfall des Vakuums.

Der Gedanke der Erfindung beruht nun darauf, daß vorgeschlagen wird, unabhängig von der zu melkenden Kuh ein Melkzeug zu verwenden, das einen langen Milchschlauch mit einem Innendurchmesser verwendet, der an sich nur optimal wäre für Kühe mit einem höchsten vorkommenden Milchfluß. Würde man ein solches Melkzeug auch für Kühe mit geringerem Milchfluß verwenden, so würde dies zwangsläufig zu Dauerschäden an den Zitzen führen. Gemäß der Erfindung wird deshalb vorgesehen, daß man praktische Vorkehrungen dahingehend trifft, daß der im Entlastungstakt auf die Zitze wirkende Druck in einem Bereich von etwa 10 bis 20 kPa liegt. Dies kann erreicht werden, indem der Druck unmittelbar unterhalb der Zitze im Entlastungstakt gemessen wird, wobei "unmittelbar unterhalb der Zitze" auch den Bereich umfaßt, der auch den Druck im Sammelstück einschließt. Unter Ausnutzung des Druckes unterhalb der Zitze zu einer Steuerung kann sodann erreicht werden, daß das Vakuum, ausgehend von dem Nennvakuum, das über das Milchableitungssystem, d.h. vom Melkbecher über das Sammelstück und den langen Milchschlauch bis zur Milchabführleitung abfällt, derart gezielt gesteuert wird, daß das tatsächlich unterhalb der Zitze wirksame Vakuum in einem vorbestimmten Bereich liegt.

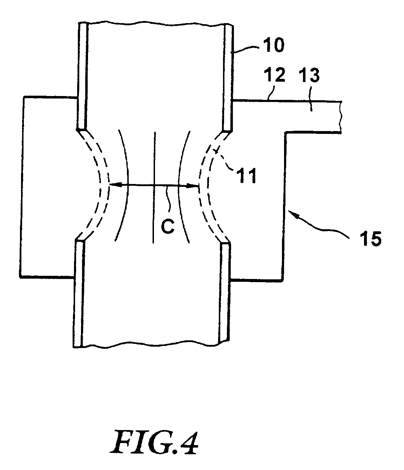

Eine Einrichtung, mit der erreicht werden kann, daß das Vakuum unterhalb der Zitze, ausgehend von dem konstanten Nennmelkvakuum, gesteuert werden kann, besteht aus der in Fig. 4 gezeigten Einrichtung. Bei dieser Einrichtung ist innerhalb des Melkschlauches 10 ein Bereich gebildet, der durch eine Ringmanschette 11 gebildet wird, die aus einem schlauchförmigen leicht zusammenpreßbaren Material besteht. Die Steuerung des durch diese Ringmanschette 11 erreichbaren Querschnitt C läßt sich durch Steuerung des Drucks in einer diese Manschette umgebenden ringförmigen Kammer 12 steuern, in der über die Zuleitung 13 ein entsprechendes Vakuum oder gegebenenfalls ein Überdruck erzeugt werden können. Die Ringmanschette nimmt sodann in Abhängigkeit von der Druckdifferenz zwischen dem Inneren des langen Milchschlauches 10 und dem Druck im Inneren der Kammer 12 eine entsprechende Stellung ein, die einen entsprechenden Querschnitt begrenzt.

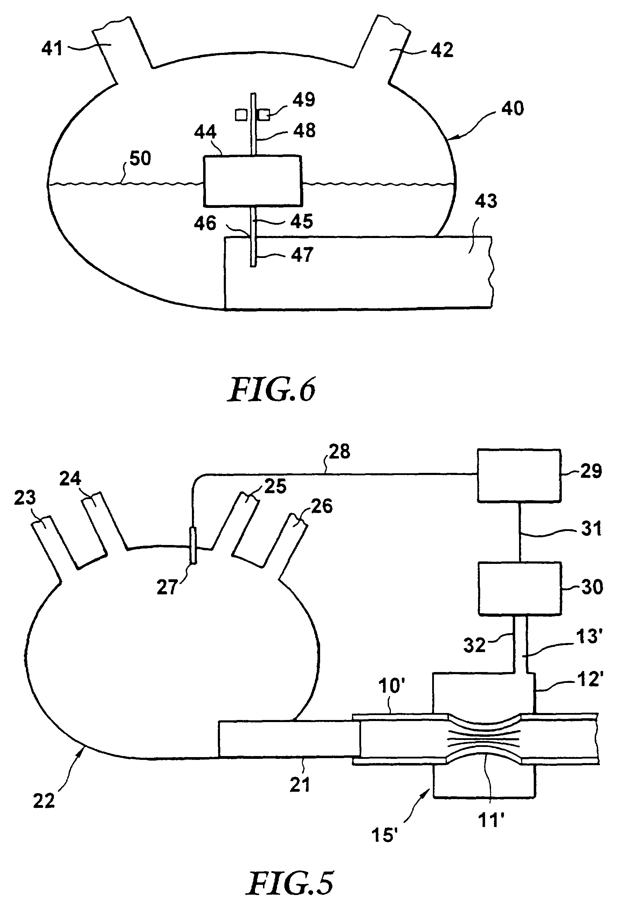

In Fig. 5 ist die in Fig. 4 gezeigte Steuereinrichtung 15, die in Fig. 5 mit 15' bezeichnet ist, in einer Anwendung gezeigt. Gleiche Teile sind in Fig. 5 mit den gleichen Bezugszeichen, jedoch mit einem Strich bezeichnet. Die Steuervorrichtung 15' ist anschließend an das Abflußrohr 21 eines Sammelstücks 22, und zwar in den sich an dieses Ableitungsrohr 21 anschließenden langen Milchschlauch 10', eingebaut. Das Sammelstück 22 ist lediglich schematisch dargestellt, wobei schematisch die vier Zuleitungen 23, 23 bis 26 der vier Melkbecher gezeigt sind. In den Innenraum des Sammelstücks steht ein Drucksensor 27 vor, der über eine Leitung 28 mit einem Druckmeßgerät 29 verbunden ist. Das Druckmeßgerät 29 gibt dem gemessenen Druck entsprechende elektrische Signale über die Leitung 31 an die Einrichtung 30 ab, die in Abhängigkeit von den enthaltenden Signalen eine Veränderung des Unterdrucks oder eines Überdrucks in der Ringkammer 12' über die Leitung 32 erzeugt.

In Fig. 6 ist ein allgemein mit 40 bezeichnetes Sammelstück gezeigt. Das Sammelstück weist aus Übersichtlichkeitsgründen lediglich zwei Einlaufstutzen 41, 42 auf, die mit entsprechenden Melkbechern verbunden sind. An seinem unteren Ende weist das Sammelstück eine im wesentlichen horizontal abgeführte Ableitung 43 auf. In dem Sammelstück ist ein Schwimmer 44 angeordnet, der auf seiner Unterseite ein Steuerschieberblatt 45 aufweist, das über einen in der Oberseite des Ableitungsrohrs 43 vorgesehenen Schlitz 46 mit seinem unteren Teil 47 in das Ableitungsrohr 43 hineinragt. An der Oberseite des Schwimmers 44 ist ein Führungsstab 48 vorgesehen, der in einem auf der Innenseite des Sammelstücks befestigten Ring 49 geführt ist. Der Schwimmer ist über das Schieberblatt 45 und den Führungsstab 48 in senkrechter Richtung verschiebbar geführt. Die Stellung des Schwimmers 44 hängt von dem Niveau 50 der Flüssigkeit ab, die sich in dem Sammelstück befindet. Der Schwimmer kann in einer unteren Stellung, in der die Unterseite des Schwimmers praktisch auf der Oberseite des Ableitungsrohres 43 aufsitzt, mit seinem Schieberblatt 45 so weit in das Rohr vorstehen, daß es fast den gesamten Querschnitt verschließt. Andererseits ist der Schwimmer derart in dem Ring 49 geführt, daß er bei Übersteigen des Flüssigkeitsniveaus 50 über einen bestimmten Stand hinaus mit seiner Oberseite gegen die Unterseite des Ringes 49 anliegt. In dieser Stellung ist das Schieberblatt 45 sodann vollständig aus dem Abführrohr 43 herausgezogen.

Die in Fig. 6 gezeichnete Anordnung arbeitet derart, daß das Schieberblatt 45 in Abhängigkeit von dem Flüssigkeitsniveau 50 mehr oder weniger in das Ableitungsrohr 43 vorsteht. Bei dem Vorhandensein von wenig Milch, die im Entlastungstakt abzuführen ist, in dem Sammelstück 40, steht der Steuerschieber 45 in das Rohr 43 hinein vor, während er bei einem ansteigenden Milchflüssigkeitsniveau 50 in dem Sammelstück 50, was einem zunehmenden Milchfluß entspricht, mehr und mehr aus dem Ableitungsrohr herausgezogen wird.

## Patentansprüche

1. Verfahren zum automatischen Milchentzug mit Hilfe eines Melkzeugs, bei dem in einem Saugtakt mit Hilfe des über einen langen Milchschlauch, ein Sammelstück und einen Melkbecher unterhalb der Zitze anliegenden Melkvakuum Milch aus der Zitze abgesogen und während eines Entlastungstaktes sich das Zitzengummi des Melkbechers an die Zitze zur Entlastung der Zitze anlegt, **dadurch gekennzeichnet, daß** ein langer Milchschlauch mit einem die Abführung großer Milchflüsse ermöglichenden großen Innenquerschnitt verwendet wird, und daß der Durchtrittsquerschnitt des Milchableitungssystems des Melkzeuges an einer vorbestimmten Stelle während des Entlastungstakte in Abhängigkeit von dem unterhalb der Zitze herrschenden Drucks gesteuert wird.

2. Verfahren zum automatischen Milchentzug mit Hilfe eines Melkzeugs, bei dem in einem Saugtakt mit Hilfe des über einen langen Milchschlauch, ein Sammelstück und einen Melkbecher unterhalb der Zitze anliegenden Melkvakuum Milch aus der Zitze abgesogen und während eines Entlastungstaktes sich das Zitzengummis des Melkbechers an die Zitze zur Entlastung der Zitze anlegt, **dadurch gekennzeichnet, dass** ein Milchschlauch mit einem die Abführung großer Milchflüsse ermöglichenden großen Innenquerschnitt verwendet wird, und dass während des Entlastungstaktes der Durchtrittsquerschnitt des Milchableitungssystems des Melkzeugs an einer vorbestimmten Stelle in Abhängigkeit von der abzutransportierenden Milchmenge gesteuert wird.

3. Vorrichtung zum automatischen Milchentzug, mit einem Melkzeug, das einen langen Milchschlauch, ein Sammelstück und wenigstens einen Melkbecher umfaßt, über das ein Melkvakuum an die Zitze anlegbar ist, und einer Vorrichtung zum Umsteuern des Melkbechers zwischen einer Saugphase, in der aus der Zitze Milch abgesogen wird, und einer Entlastungsphase, in der das Zitzengummi des Melkbechers zur Entlastung der Zitze gegen diese anliegt, **dadurch gekennzeichnet, daß** ein langer Milchschlauch (10) mit einem die Abführung großer Milchflüssen ermöglichenden großen Innenquerschnitt vorgesehen wird, daß eine Einrichtung (15) zur Veränderung des Durchtrittsquerschnitts (C) des Milchableitungssystems des Melkzeugs an einer vorbestimmten Stelle vorgesehen ist, und daß eine Einrichtung (12) zur Veränderung des Durchtrittsquerschnitts in Abhängigkeit von dem unterhalb der Zitze während des Entlastungstakts anliegenden Unterdrucks vorgesehen ist.

4. Vorrichtung nach Anspruch 3, **dadurch gekennzeichnet, daß** die Einrichtung (15') zur Veränderung des Durchtrittsquerschnitts zur ihrer Steuerung unmittelbar mit dem Milchableitungsrohr unterhalb der Zitze oder dem Sammelstück (22) verbunden ist.

5. Vorrichtung nach Anspruch 3, **dadurch gekennzeichnet, daß** eine Druckmeßvorrichtung (27, 29) vorgesehen ist, die mit dem Inneren der Milchabführleitung im Bereich unterhalb der Zitze und dem Sammelstück (22) verbunden ist und entsprechend dem gemessenen Druck die Einrichtung (15') zur Veränderung des Durchtrittsquerschnitts betätigt.

6. Vorrichtung zum automatischen Milchentzug, mit einem Melkzeug, das einen langen Milchschlauch, ein Sammelstück und wenigstens einen Melkbecher umfasst, über das ein Melkvakuum an die Zitze anlegbar ist, und einer Vorrichtung zum Umsteuern des Melkbechers zwischen einer Saugphase, in der aus der Zitze Milch abgesogen wird, und einer Entlastungsphase, in der das Zitzengummi des Melkbechers zur Entlastung der Zitze gegen diese anliegt, **dadurch gekennzeichnet, dass** ein langer Milchschlauch (10) mit einem die Abführung großer Milchflüssen ermöglichenden großen Innenquerschnitt vorgesehen wird, dass eine Einrichtung (15) zur Veränderung des Durchtrittsquerschnitts (C) des Milchableitungssystems des Melkzeugs an einer vorbestimmten Stelle vorgesehen ist, und dass eine Einrichtung (12) zur Veränderung des Durchtrittsquerschnitts in Abhängigkeit von der abzutransportierenden Milchmenge vorgesehen ist.

7. Vorrichtung nach Anspruch 6, **dadurch gekennzeichnet, daß** die Einrichtung zur Veränderung des Durchtrittsquerschnitts einen in dem Sammelstück (40) vorgesehenen Schwimmer (44) umfaßt, der in Abhängigkeit von seinem Schwimmniveau den Durchtrittsquerschnitt der Auslaßleitung (43) des Sammelstücks oder der Einlaßleitungen (41, 42) zu dem Sammelstück verändert.

8. Vorrichtung nach Anspruch 6, **dadurch gekennzeichnet, daß** in dem Milchableitungssystem ein Milchflußmesser vorgesehen ist, der in Abhängigkeit von dem gemessenen Milchfluß ein Betätigungssignal auf die Einrichtung zur Veränderung des Durchtrittsquerschnitts gibt.

9. Vorrichtung nach einem der Ansprüche 3 bis 8, **dadurch gekennzeichnet, daß** die Einrichtung zur Veränderung des Durchtrittsquerschnitts eine pneumatisch betätigbare Ringmanschette (11) in dem Milchableitungssystem umfaßt.

10. Vorrichtung nach einem der Ansprüche 3 bis 8, **dadurch gekennzeichnet, daß** die Einrichtung zur Veränderung des Durchtrittsquerschnitts eine pneumatisch oder elektrisch betätigbare Irisblende in dem Milchableitungssystem umfaßt.

11. Vorrichtung nach einem der Ansprüche 3 bis 8, **dadurch gekennzeichnet, daß** die Einrichtung zur Veränderung des Durchtrittsquerschnitts eine pneumatisch oder elektrisch betätigbare Ventilmembran umfaßt.

## Claims

1. A method of automatically extracting milk with the aid of a milking unit, in the case of which milk is extracted from the teat in a suction cycle with the aid of the milking vacuum applied below the teat via a long milk hose, a collecting piece and a teat cup, and in the case of which the teat rubber of the teat cup clings softly to the teat for relieving the teat during a relief cycle, **characterized in that** a long milk hose is used, which has a large interior cross-section permitting the discharge of high flows of milk, and that, during the relief cycle, the flow cross-section of the milk discharge system of the milking unit is controlled at a predetermined point in dependence upon the pressure prevailing below the teat.

2. A method of automatically extracting milk with the aid of a milking unit, in the case of which milk is extracted from the teat in a suction cycle with the aid of the milking vacuum applied below the teat via a long milk hose, a collecting piece and a teat cup, and in the case of which the teat rubber of the teat cup clings softly to the teat for relieving the teat during a relief cycle, **characterized in that** a milk hose is used, which has a large interior cross-section permitting the discharge of high flows of milk, and that, during the relief cycle, the flow cross-section of the milk discharge system of the milking unit is controlled at a predetermined point in dependence upon the amount of milk to be discharged.

3. A device for automatically extracting milk comprising a milking unit, which is composed of a long milk hose, a collecting piece and at least one teat cup and with the aid of which a milking vacuum can be applied to the teat, and a device for changing over the teat cup between a suction phase in which milk is extracted from the teat and a relief phase in which the teat rubber of the teat cup clings softly to the teat for relieving the teat, **characterized in that** a long milk hose (10) is provided, which has a large interior cross-section permitting the discharge of high flows of milk, that a means (15) is provided for varying the flow cross-section (C) of the milk discharge system of the milking unit at a predetermined point, and that a means (12) is provided for varying the flow cross-section in dependence upon the negative pressure applied below the teat during the relief cycle.

4. A device according to claim 3, **characterized in that** the means (15') for varying the flow cross-section is directly connected to the milk discharge tube below the teat or the collecting piece (22) for its control.

5. A device according to claim 3, **characterized in that** a pressure metering device (27, 29) is provided, which is connected to the interior of the milk discharge line in the area below the teat and to the collecting piece (22) and which actuates, according to the pressure measured, the means (15') for varying the flow cross-section.

6. A device for automatically extracting milk comprising a milking unit, which is composed of a long milk hose, a collecting piece and at least one teat cup and with the aid of which a milking vacuum can be applied to the teat, and a device for changing over the teat cup between a suction phase in which milk is extracted from the teat and a relief phase in which the teat rubber of the teat cup clings softly to the teat for relieving the teat, **characterized in that** a long milk hose (10) is provided, which has a large interior cross-section permitting the discharge of high flows of milk, that a means (15) is provided for varying the flow cross-section (C) of the milk discharge system of the milking unit at a predetermined point, and that a means (12) is provided for varying the flow cross-section in dependence upon the amount of milk to be discharged.

7. A device according to claim 6, **characterized in that** the means for varying the flow cross-section is provided with a float (44), which is arranged in the interior of the collecting piece (40) and which, in dependence upon its floating level, varies the flow cross-section of the discharge line (43) of the collecting piece or of the inlet lines (41, 42) leading into the collecting piece.

8. A device according to claim 6, **characterized in that** the milk discharge system has provided therein a milk flow meter which, in dependence upon the flow of milk measured, applies an actuating signal to the means for varying the flow cross-section.

9. A device according to one of the claims 3 to 8, **characterized in that** the means for varying the flow cross-section includes a pneumatically operable annular collar (11) in the milk discharge system.

10. A device according to one of the claims 3 to 8, **characterized in that** the means for varying the flow cross-section includes a pneumatically or electrically operable iris diaphragm in the milk discharge system.

11. A device according to one of the claims 3 to 8, **characterized in that** the means for varying the flow cross-section includes a pneumatically or electrically operable valve diaphragm.

## Revendications

1. Procédé de traite automatique à l'aide d'une trayeuse, selon lequel pendant un temps de succion, le lait est aspiré du trayon à l'aide du vide de traite qui est appliqué sous le trayon par l'intermédiaire d'un tuyau long à lait, d'un collecteur et d'un gobelet trayeur, et pendant un temps de massage, le manchon trayeur du gobelet trayeur s'applique contre le trayon pour soulager celui-ci, **caractérisé en ce qu'**on utilise un tuyau long à lait avec une grande section transversale intérieure permettant l'évacuation de grands débits de lait, et **en ce que** la section transversale de passage du système d'évacuation de la trayeuse est commandée à un endroit prédéfini, pendant les temps de massage, en fonction de la pression qui règne sous le trayon.

2. Procédé de traite automatique à l'aide d'une trayeuse, selon lequel pendant un temps de succion, le lait est aspiré du trayon à l'aide du vide de traite qui est appliqué sous le trayon par l'intermédiaire d'un tuyau long à lait, d'un collecteur et d'un gobelet trayeur, et pendant un temps de massage, le manchon trayeur du gobelet trayeur s'applique contre le trayon pour soulager celui-ci, **caractérisé en ce qu'**on utilise un tuyau à lait avec une grande section transversale intérieure permettant l'évacuation de grands débits de lait, et **en ce que** pendant les temps de massage, la section transversale de passage du système d'évacuation de lait de la trayeuse est commandée à un endroit prédéfini, en fonction de la quantité de lait à évacuer.

3. Dispositif de traite automatique comprenant une trayeuse qui est formée d'un tuyau long à lait, d'un collecteur et d'au moins un gobelet trayeur et par l'intermédiaire de laquelle un vide de traite peut être appliqué au trayon, et un dispositif pour faire passer le gobelet trayeur d'une phase de succion pendant laquelle le lait est aspiré du trayon, et une phase de massage pendant laquelle le manchon trayeur du gobelet trayeur est appliqué contre le trayon pour soulager celui-ci, et inversement, **caractérisé en ce qu'**il est prévu un tuyau long à lait (10) avec une grande section transversale intérieure permettant l'évacuation de grands débits de lait, **en ce qu'**il est prévu un dispositif (15) pour modifier la section transversale de passage (C) du système d'évacuation de lait de la trayeuse à un endroit prédéfini, et **en ce qu'**il est prévu un dispositif (12) pour modifier la section transversale de passage en fonction de la dépression appliquée sous le trayon pendant le temps de massage.

4. Dispositif selon la revendication 3, **caractérisé en ce que** le dispositif (15') pour modifier la section transversale de passage est relié directement, pour être commandé, au tube d'évacuation de lait prévu sous le trayon, ou au collecteur (22).

5. Dispositif selon la revendication 3, **caractérisé en ce qu'**il est prévu un manomètre (27, 29) qui est relié à l'intérieur de la conduite d'évacuation de lait, dans la zone située sous le trayon, et au collecteur (22), et qui, en fonction de la pression mesurée, actionne le dispositif (15') pour modifier la section transversale de passage.

6. Dispositif de traite automatique comprenant une trayeuse qui est formée d'un tuyau long à lait, d'un collecteur et d'au moins un gobelet trayeur et par l'intermédiaire de laquelle un vide de traite peut être appliqué au trayon, et un dispositif pour faire passer le gobelet trayeur d'une phase de succion pendant laquelle le lait est aspiré du trayon, et une phase de massage pendant laquelle le manchon trayeur du gobelet trayeur est appliqué contre le trayon pour soulager celui-ci, et inversement, **caractérisé en ce qu'**il est prévu un tuyau long à lait (10) avec une grande section transversale intérieure permettant l'évacuation de grands débits de lait, **en ce qu'**il est prévu un dispositif (15) pour modifier la section transversale de passage (C) du système d'évacuation du lait de la trayeuse à un endroit prédéfini, et **en ce qu'**il est prévu un dispositif (12) pour modifier la section transversale de passage en fonction de la quantité de lait à évacuer.

7. Dispositif selon la revendication 6, **caractérisé en ce que** le dispositif pour modifier la section transversale de passage comporte un flotteur (44) qui est prévu dans le collecteur (40) et qui, en fonction du niveau où il flotte, modifie la section transversale de passage de la conduite d'évacuation (43) du collecteur, ou des conduites d'admission (41, 42) qui mènent au collecteur.

8. Dispositif selon la revendication 6, **caractérisé en ce qu'**il est prévu dans le système d'évacuation de lait un débitmètre à lait qui, en fonction du débit de lait mesuré, envoie un signal d'actionnement au dispositif pour modifier la section transversale de passage.

9. Dispositif selon l'une des revendications 3 à 8, **caractérisé en ce que** le dispositif pour modifier la section transversale de passage comporte dans le système d'évacuation de lait un manchon annulaire (11) à commande pneumatique.

10. Dispositif selon l'une des revendications 3 à 8, **caractérisé en ce que** le dispositif pour modifier la section transversale de passage comporte dans le système d'évacuation de lait un diaphragme à iris à commande pneumatique ou électrique.

11. Dispositif selon l'une des revendications 3 à 8, **caractérisé en ce que** le dispositif pour modifier la section transversale de passage comprend une membrane de soupape à commande pneumatique ou électrique.
